# EUROPÄISCHE PATENTSCHRIFT

(11) **EP 4 342 439 B1**
(45) Veröffentlichungstag und Bekanntmachung des Hinweises auf die Patenterteilung: **01.10.2025**
(21) Anmeldenummer: 23194159.2
(22) Anmeldetag: 30.08.2023
(51) Int. Cl.: A61G 5/04

(54) **MUSKELKRAFTBETRIEBENER ROLLSTUHL UND VERFAHREN ZUR STEUERUNG EINES HILFSANTRIEBS FÜR EINEN SOLCHEN**
MUSCLE-POWERED WHEELCHAIR AND METHOD FOR CONTROLLING AN AUXILIARY DRIVE FOR SUCH A WHEELCHAIR
FAUTEUIL ROULANT ENTRAÎNÉ PAR LA FORCE MUSCULAIRE ET PROCÉDÉ DE COMMANDE D'UN ENTRAÎNEMENT AUXILIAIRE POUR UN TEL FAUTEUIL ROULANT

(30) Priorität: 23.09.2022 DE 102022124524
(43) Veröffentlichungstag der Anmeldung: 27.03.2024
(73) Patentinhaber: Motion Advantage Verwaltungs-GmbH, 72336 Balingen (DE)
(72) Erfinder: Birmanns, Thomas, 72336 Balingen (DE); Kauffmann, Harald, 72336 Balingen (DE)
(74) Vertreter: Christ, Niko

(56) Entgegenhaltungen:
- EP-A2- 0 995 415
- DE-U1- 202008 017 258
- DE-U1- 202016 100 975

## Beschreibung

Die vorliegende Erfindung betrifft einen muskelkraftbetriebenen Rollstuhl mit Hilfsantrieb, umfassend zwei Antriebsräder mit Radfelgen sowie elektrischen Antriebsmitteln, wobei den Radfelgen jeweils ein Greifreifen vermittels wenigstens zweier über den Umfang der Antriebsräder verteilter Verbindungselemente zugeordnet ist, sowie ein Verfahren zur Steuerung eines Hilfsantriebs für einen solchen.

Ein solcher Rollstuhl ist bereits aus der Offenbarung der DE 198 48 530 C1 vorbekannt. Dieser beruht auf einer konzentrischen, am Radumfang befindlichen Greifreifenlagerung und einem Sensorelement mit Federvorspannung, welche den Sensor in einer Nullstellung hält. Wird der Greifreifen von einem Benutzer etwa nach vorn geschoben, so verschiebt sich dieser in Bezug auf die Felge, während die Aufhängung des Greifreifens die zugehörige Richtung detektiert. Das Verbindungselement gerät in Schräglage und löst dadurch einen Schalter aus, welcher einen Antrieb des Rollstuhls zur Vorwärtsfahrt veranlasst.

Darüber hinaus sind weitere vergleichbare Rollstühle aus der DE 20 2008 017 258 U1, der DE 20 2016 100 975 U1 und der EP 0 995 415 A2 bekannt.

Weitere Systeme haben eine Lagerung des Greifreifens im Zentrum des Rades, also im Nabenmotor. Eine Bauform ist in der DE 697 19 432 T2 beschrieben. Der Greifreifen ist mittels dreier speichenartiger Verstrebungen nach innen an einer verdrehbaren Scheibe befestigt. Diese stützt sich über Federn elastisch am Nabenkörper ab.

Weiterer Stand der Technik ist bereits aus der DE 20 2016 100 975 U1 und der EP 0 995 415 A2 bekannt.

Ein erstes Problem vorbekannter Bauformen ist, dass bei der kraftbedingten Auslenkung des Greifreifens zunächst eine Federvorspannung der Greifreifenlagerung überwunden werden muss, bevor ein Messsignal erzeugt wird, das zu einem Fahrsignal an den Antrieb führt. Diese Federvorspannung ist, je nach Konstruktion, mehr oder weniger groß. Die meisten Lösungen verfügen über eine wenig präzise Lagerung des Greifreifens, da diese Lagerung allen typischen Belastungen eines Rollstuhls standhalten muss. Vor allem radiale und axiale Stöße und Schläge auf den Greifreifen, beispielsweise beim Fahren gegen ein Hindernis oder beim Umfallen des vom Rollstuhl abgenommenen Rades während des Verladens in ein Automobil, können auftreten. Diese Robustheit wird für gewöhnlich mit einer Lagerung aufgefangen, die für solche Belastung ausgelegt und damit dementsprechend schwergängig ist. Die Rückstellung und Zentrierung einer solch schwergängigen Lagerung wiederum kann lediglich mit einer entsprechend großen Federvorspannung erreicht werden.

Ein zweites Problem ergibt sich für den Fall, dass eine einseitig größere Federvorspannung den Greifreifen bevorzugt in eine erste Richtung stärker vorspannt als in eine zweite Richtung. Dadurch können gleich große Kräfte, welche durch den Benutzer eingeleitet werden, zu unterschiedlich starken Fahrsignalen führen, je nachdem ob sie in der ersten Drehrichtung erzeugt werden oder in der zweiten Drehrichtung. Vor allem kann dies ungünstige Auswirkungen für die Anwendung des Rollstuhls haben, sofern er zwei identische Räder hat, die sowohl links als auch rechts an den Rollstuhl montiert werden können und diese Räder mit unterschiedlicher Vorspannung einmal links und ein anderes mal rechts an den Rollstuhl angebaut werden. Selbst eine Gewöhnung an diesen Fehler ist damit nicht möglich.

Ein drittes Problem ist die Auslenkung des Greifreifens gegen einen harten Anschlag. Nach Überwindung der Federvorspannung folgt eine kurze Auslenkung im aktiven Sensorfeld, worauf im Anschluss meist ein harter Anschlag des Greifreifens bei der Maximalauslenkung folgt. Hierdurch ergibt sich für den Rollstuhlfahrer ein undefiniertes haptisches Gefühl, welches in Unsicherheit resultiert und die Schwierigkeit mit sich bringt, eine angemessen dosierte Signalerzeugung zu generieren.

Manche vorbekannte Lösungen versuchen, dies durch sogenannte nachgiebige Mechanismen zu beheben. Ein nachgiebiger Mechanismus ist ein flexibler Mechanismus, der eine Kraft- und Bewegungsübertragung durch elastische Körperverformung erreicht. Er gewinnt einen Teil oder die gesamte Bewegung aus einer gegenseitigen Flexibilität seiner Glieder und nicht nur aus der Bewegung von Starrkörpergelenken. Aus der EP 2 277 487 B1 ist ein solcher Mechanismus bekannt, der mehrere parallele Federelemente zu einem nachgiebigen Mechanismus vereint. Diese werden in mehrfacher Ausführung am Umfang der Felge des Rollstuhlrades verteilt angebracht und sollen so eine rotatorische und gleichzeitig konzentrische Bewegung des Greifreifens bewirken. Das Problem hierbei ist jedoch, dass jeder dieser flexiblen Mechanismen wie eine eigene Feder wirkt. Somit wird die eingeleitete Kraft nicht in eine konzentrische Bewegung umgeleitet, sondern aufgrund der Gesamtflexibilität des Rollstuhlrades und Greifreifens, immer nur bis zum nächsten flexiblen Element. Von dort an verteilt sich die Kraft in das gesamte System und führt zur Verformung desselben, und weniger zum gezielten konzentrischen Auslenken des Greifreifens. Nur in einem theoretisch vollkommen starren Aufbau ohne jede Flexibilität könnte eine rein rotatorische Bewegung des Greifreifens stattfinden, die durch eine Krafteinleitung an jedem beliebigen Ort am Umfang einen gleich großen Signalhub erzeugt.

In der DE 10 2017 222 036 A1 wird als flexibler Mechanismus als Lagerung vorgeschlagen, welcher einem Doppelbiegebalken einer Wägezelle gleicht. Das oben angesprochene Problem tritt dort jedoch ebenfalls auf. Ein Einsatz mit derartigem Aufbau, bei dem jede der Lagerungen als Doppelbiegebalken mit Sensoreinheit ausgeführt sind, ist zudem ökonomisch nicht sinnvoll.

Vor diesem Hintergrund liegt der vorliegenden Erfindung die Aufgabe zu Grunde, einen muskelkraftbetriebenen Rollstuhl zu schaffen, welcher eine präzise Erfassung der eingeleiteten Muskelkraft erlaubt, aber dennoch ausreichend robust ist, um den Rollstuhl im Alltag zu betreiben, sowie trotz eines geringen Betätigungswegs keinen festen Anschlag aufweist. Ebenfalls soll ein Verfahren zum Betrieb eines solchen Rollstuhls vorgeschlagen werden, welches diese Probleme löst.

Dies gelingt durch einen muskelkraftbetriebenen Rollstuhl gemäß den Merkmalen der unabhängigen Ansprüche 1 oder 6, sowie durch ein Verfahren zum Betrieb eines solchen Rollstuhls gemäß den Merkmalen der nebengeordneten Ansprüche 9 oder 13. Sinnvolle Ausgestaltungen sowohl des Rollstuhls als auch des Verfahrens können den sich jeweils anschließenden abhängigen Ansprüchen entnommen werden.

Erfindungsgemäß vorgesehen ist ein muskelkraftbetriebener Rollstuhl mit Hilfsantrieb, umfassend zwei Antriebsräder mit Radfelgen sowie elektrischen Antriebsmitteln, wobei den Radfelgen jeweils ein Greifreifen vermittels wenigstens zweier über den Umfang der Antriebsräder verteilter Verbindungselemente zugeordnet ist, wobei die Radfelgen oder die Greifreifen ein elastisch verformbares Kraftelement bilden und diesem wenigstens ein Signalgeber zugeordnet ist, welcher eine elastische Verformung des Kraftelements in radialer Richtung erfasst und ein mit dem Grad der Verformung des Kraftelements korrespondierendes Fahrsignal erzeugt, wobei der wenigstens eine Signalgeber eingangsseitig mit einem Steuergerät und dieses wiederum ausgangsseitig mit Steuereingängen der elektrischen Antriebsmittel signalverbunden ist.

Der Benutzer kann in wenigstens ein solches Kraftelement aufgrund der elastischen Verformbarkeit Kräfte einleiten, welche zu einer geometrischen Auslenkung des Greifreifens gegenüber der Radfelge oder umgekehrt führen, welche ihrerseits von dem Signalgeber erfasst ist. Dies kann je nach Art des verwendeten Messverfahrens auf unterschiedliche Weise erfolgen, insbesondere durch Sensoren zur Kraftmessung, soweit mit einer Dehnung, Stauchung oder Biegung gearbeitet wird, wobei in diesen Fällen auch eine Wegmessung durchgeführt werden kann. Insbesondere bei Biegungen kann, etwa bei Dehnmessstreifen, eine Erfassung des Widerstands, ansonsten eine Winkelmessung erfolgen, wobei diese Aufzählung nicht abschließend sein soll.

Hierbei vergrößert sich aufgrund der endlichen Elastizität des Materials des wenigstens einen Kraftelements der Widerstand mit zunehmender Auslenkung, so dass kein harter Anschlag entsteht, sondern vielmehr die endliche Elastizität eine zunehmende Dämpfung darstellt. Diese Dämpfung sorgt dafür, dass ein tatsächlicher Anschlag nie erreicht wird und ein solcher den Benutzer auch nicht irritieren kann. Auch bei größeren Kräften kann auf diese Weise die Auslenkung klein gehalten werden, so dass eine präzise Messung der Auslenkung hier dennoch zu einer Abdeckung eines großen Signalbereichs führt, so dass sehr feine Bewegungen ebenso erfasst werden können, wie sehr starke Bewegungen.

Bevorzugt können die Verbindungselemente mit der Radfelge jeweils vermittels eines ersten Drehlagers und mit dem Greifreifen vermittels eines zweiten Drehlagers gelenkig verbunden sein. Der derart gelagerte Greifreifen ist statisch vollkommen bestimmt und wäre in einem starren System unbeweglich. Die Auslenkung des Greifreifens bewirkt ein Verschwenken des Verbindungsgliedes aus einer Nulllage in eine Auslenkung in eine Vorwärtsrichtung oder eine Rückwärtsrichtung, was damit zu einer Verformung entweder des Greifreifens oder aber der Radfelge führt, je nachdem welches dieser Teile als Kraftelement gestaltet ist. Die Verwendung elastisch verformbarer Materialien, etwa Federstahls, kann zu einer Ausgestaltung eines dieser Teile als Kraftelement führen. In einem vollkommen steifen System, also ohne die Möglichkeit einer elastischen Verformung des Greifreifens oder der Radfelge, wäre keine Auslenkung des Greifreifens gegenüber der Radfelge möglich. Aufgrund dieser Elastizitäten des Systems, vor allen Dingen aufgrund der Elastizität des Kraftelements, lässt sich der Greifreifen auslenken.

Das Einleiten einer Kraft auf den Greifreifen im Ruhezustand, also senkrecht zur Ausrichtung des Verbindungselements, bewirkt eine theoretisch unendlich hohe Kraftresultierende in radialer Richtung des Greifreifens. Mit zunehmender Auslenkung des Greifreifens reduziert sich die radiale Kraftkomponente nach einer sinus-Funktion. Dies bedeutet, dass das System nahe dem Ruhezustand sehr sensibel auf eingeleitete Kräfte reagiert, was zu der gewünschten Feinfühligkeit führt. Je weiter der Greifreifen ausgelenkt wird, desto höher sind die Kräfte, die für eine weitere Auslenkung erforderlich sind. In Abhängigkeit der Steifigkeit des Kraftelements, welche letztlich mit einer Federkonstanten gleichzusetzen ist, lassen sich so unterschiedliche Kraft-Auslenkungskennlinien erzielen.

In einer weiter bevorzugten Ausgestaltung können das erste Drehlager und/ oder das zweite Drehlager als Wälzlager ausgeführt sein. Wälzlager haben vor allem bei einem vorgespannten System den Vorteil, den sogenannten Stick-Slip-Effekt oder Haftgleiteffekt zu eliminieren. Bei der Verwendung gewöhnlicher Gleitlager kann dieser Effekt auftreten und verhindert die Feinfühligkeit, da eine Mindestkraft zur Überwindung dieses Effektes notwendig ist. Mit Wälzlagern wird die eingeleitete Kraft unmittelbar in eine Bewegung übersetzt.

Konkret kann die Verbindung zwischen einem Greifreifen und einer Radfelge derart gestaltet sein, dass die Verbindungselemente mit dem Greifreifen vermittels einer vom Greifreifen radial nach innen oder außen weisenden Greifreifenlasche, mit der Radfelge vermittels einer von der Radfelge radial nach außen oder innen weisenden Lagerstelle verbunden sind. Der Greifreifen ist der Radfelge dadurch im Eingriff des Benutzers praktisch vorgehängt, jedoch bei der Verwendung von wenigstens zwei Verbindungselementen definiert gehalten. Besonders bevorzugt werden drei oder mehr Verbindungselemente eingesetzt, welche sich gleichmäßig über den Umfang von Greifreifen und Radfelge verteilen, um eine zentrierte und in allen Drehpositionen des Rades gleichartig funktionierende Verformung des Kraftelements zu gewährleisten.

Im Hinblick auf die Auswertung der Auslenkung des Verbindungselements kann besonders bevorzugt vorgesehen sein, dass es sich bei dem wenigstens einen Signalgeber um eine Hall-Sonde handelt, welche an der Radfelge oder am Greifreifen angeordnet und einem Verbindungselement zugewandt ist und welche eine Bewegung eines an diesem Verbindungselement angeordneten Magneten erfasst. Aufgrund des Umstands, dass es sich bei der Hall-Sonde um eine Messeinheit und nicht um einen Schaltkontakt handelt, kann von der Stärke des Magnetfelds auf die Position des Magneten zurückgeschlossen werden. Das Verbindungselement kann vorteilhafterweise länglich gestaltet sein und den Magneten an einem Ende tragen, während die Hall-Sonde an dem Greifreifen oder der Radfelge fest angeordnet ist. Aufgrund der Auslenkung streicht der Magnet an der Hall-Sonde vorbei und verlässt teilweise deren Messbereich, so dass ein durch den Hall-Effekt verursachtes Signal des Magneten bei größerer Auslenkung schwächer wird. Entsprechend wirkt dies auf ein von der Hall-Sonde ausgegebenes elektrisches Signal zurück. Auf eine Bewegungsrichtung kann entweder durch zusätzliche Sensorik oder durch eine räumliche Auflösung des Hall-Sensors, oder aber durch die Anordnung mehrerer benachbarter Hall-Sensoren und einen Vergleich von deren Messwerten zurückgeschlossen werden.

Alternativ kann auch vorgesehen sein, dass es sich bei dem wenigstens einen Signalgeber um einen Biegebalken oder einen Doppelbiegebalken handelt, auf dessen Außenseite ein Dehnmessstreifen angeordnet ist. Diese haben den Vorteil, dass es sich dabei quasi um einen Null-Weg-Sensor handelt, da die Verformung solcher Systeme unterhalb der menschlichen Wahrnehmbarkeit bleibt. Weitere Sensoren sind vorstellbar, wie magnetostriktiv, magnetoresistiv, induktiv, optisch und dergleichen mehr. Dabei ist es unerheblich, ob der Sensor an der Lagerstelle oder außerhalb angeordnet ist.

Weiter können mit einigem Vorteil mehrere Signalgeber vorgesehen sein, vorzugsweise ein Signalgeber an jedem Verbindungselement. Auf diese Art können Signale anders als reine Fahrsignale über die Greifreifen erzeugt werden. Beim reinen Fahrsignal lenken die mehreren Sensoren um das gleiche Maß in die gleiche Richtung aus, was zu gleichförmigen Signalen führt. Diese kann eine Elektronik als Fahrsignal identifizieren. Wird jedoch beispielsweise eine radiale Kraft auf den Greifreifen wirken, so würden die mehreren Sensoren unterschiedliche Signale erzeugen. Auf diese Weise lassen sich einerseits Fehler bei der Auslenkung erkennen, beispielsweise bei Remplern an Hindernissen. Andererseits können so jedoch auch gezielt Signale für weitere Befehle erzeugt werden. Entsprechende Impulse wie radiales Klopfen, Ziehen oder Auf- und Abdrücken können mithilfe von Algorithmen erkannt und als Eingabebefehl für diverse Einstellungsmöglichkeiten genutzt werden.

In einer alternativen Ausgestaltung des Kraftelements kann es vorgesehen sein, dass die Verbindungselemente elastisch verformbare Kraftelemente bilden und diesen wenigstens ein Signalgeber zugeordnet ist, welcher eine elastische Verformung des Kraftelements in dessen Längsrichtung erfasst und ein mit dem Grad der Verformung des Kraftelements korrespondierendes Fahrsignal erzeugt, wobei der wenigstens eine Signalgeber eingangsseitig mit einem Steuergerät und dieses wiederum ausgangsseitig mit Steuereingängen der elektrischen Antriebsmittel signalverbunden ist. In diesem Fall wird das Verbindungselement nicht unbedingt drehbar gelagert, sondern kann auch seinerseits ein federndes Lager darstellen, so dass sich das Verbindungselement beim Einleiten einer Schubkraft in den Greifreifen auslenkt.

In einem solchen Fall kann es sich bei dem wenigstens einen Signalgeber besonders bevorzugt um einen Dehnmessstreifen handeln, welcher die Auslenkung des elastisch verformbaren Verbindungselements auswerten und erfassen kann.

In einer bevorzugten Ausgestaltung kann die vorliegende Erfindung auch für einen Betrieb für Hemiplegiker ausgestaltet sein. Da diese den Rollstuhl mit nur einem Arm bedienen, kann bedarfsweise in einem solchen Fall ein Greifreifen auf der Seite, auf welcher die Bedienung nicht stattfinden kann, entfallen. Die Bedienung erfolgt dann nur über den einen Greifreifen auf der Seite, an welcher dieser angebracht ist.

Die vorstehend beschriebene Erfindung wird im Folgenden anhand eines Ausführungsbeispiels näher erläutert.

Es zeigen
- Figur 1: einen muskelkraftbetriebenen Rollstuhl mit an den Radfelgen aufgehängten Greifreifen in perspektivischer Darstellung,
- Figur 2a: ein Detail der Aufhängung eines Greifreifens an einer Radfelge mit einem Querschnitt eines Verbindungselements in Nullstellung in perspektivischer Teilschnittdarstellung,
- Figur 2b: das Detail gemäß Figur 2a in einer Auslenkung des Verbindungselements,
- Figur 3: einen an einer Radfelge aufgehängten Greifreifen in einer schematischen Draufsicht,
- Figur 4: einen an einer Radfelge über stauchbare Verbindungselemente aufgehängten Greifreifen in einer Ruhelage,
- Figur 5: den Greifreifen gemäß Figur 4 in einer ausgelenkten Lage, sowie
- Figur 6: ein Verbindungsschema von Sensoren, Aktoren und Steuergerät.

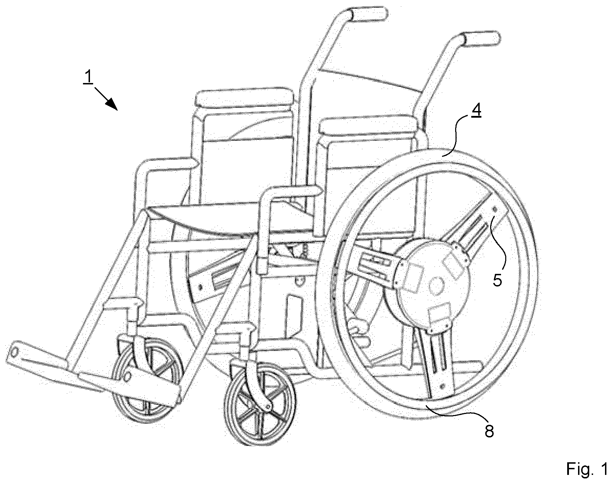

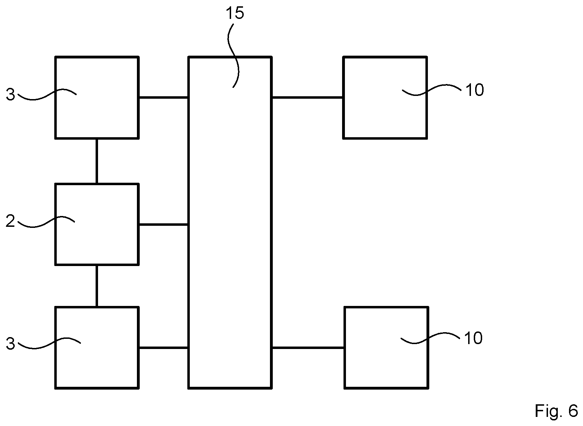

Figur 1 zeigt einen muskelkraftbetriebenen Rollstuhl 1, welcher mit zwei Antriebsrädern 4 ausgestattet ist. Diese Antriebsräder 4 weisen Greifreifen 8 auf, welche an Radfelgen 5 der Antriebsräder 4 vorgehängt sind. Mithilfe der Greifreifen 8 kann ein Benutzer des Rollstuhls 1 eine Muskelkraft in die Antriebsräder 4 einleiten, um den Rollstuhl 1 vorwärts zu bewegen. Dabei weist der Rollstuhl 1 einen Hilfsantrieb auf, welcher zu der eingekoppelten Muskelkraft einen zusätzlichen Kraftbeitrag einkoppelt, um den Benutzer beim Antrieb des Rollstuhls 1 zu unterstützen. Die Antriebsräder 4 weisen hierzu jeweils einen, hier nicht gezeigten, Nabenmotor als elektrisches Antriebsmittel 3 auf, welcher über einen Energiespeicher 2 gespeist wird. Als Energiespeicher 2 sind Akkumulatoren vorgesehen, welche während einer Bergabfahrt durch Rekuperation oder durch eine externe Ladespannung aufgeladen werden können. Die Verschaltung der Antriebsmittel 3 und des Energiespeichers 2 mit weiteren Komponenten ist in Figur 6 näher erläutert.

Die Aufhängung der Greifreifen 8 an den Radfelgen 5 der Antriebsräder 4 erfolgt an Lagerstellen 6 der Radfelgen 5, welche gleichmäßig über deren Umfang verteilt angeordnet sind. Bevorzugt sind drei Lagerstellen 6 vorgesehen, da diese eine definierte Lagerung des Greifreifens 8 erlauben, aber auch genügend Freiheit für eine Verformung des Greifreifens 8 lassen. Dies ist erforderlich, da der Greifreifen 8 im vorliegenden Beispiel als Kraftelement dient, welches während der Einleitung von Muskelkraft als Dämpfung dient, aber eine Verschiebung des Greifreifens 8 gegenüber der Radfelge 5 erlaubt.

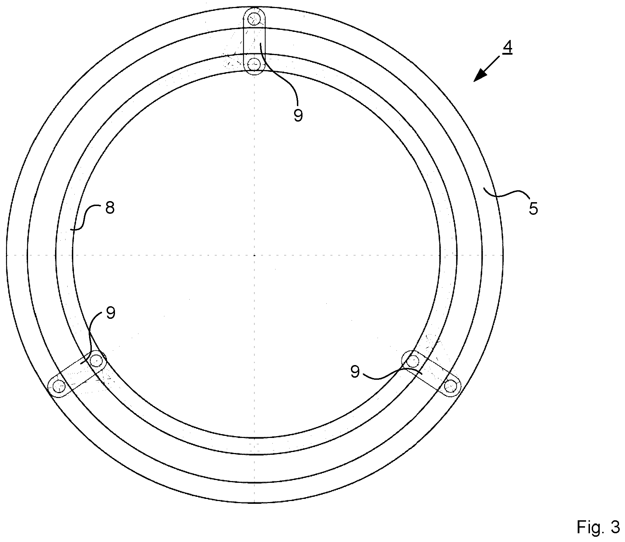

Schiebt der Benutzer den Rollstuhl 1 durch Einleitung von Muskelkraft in einen Greifreifen 8 an, so bewegt sich zunächst der Greifreifen 8 in Richtung der eingeleiteten Kraft vorwärts. Aufgrund der gleichmäßigen Lagerung des Greifreifens 8 an mit den Lagerstellen 6 korrespondierenden Greifreifenlaschen 7 wir die Vorwärtsbewegung in eine rotatorische Bewegung umgesetzt. Diese Bewegung wird aber durch Verbindungselemente 9 gehindert, welche jeweils eine Greifreifenlasche 7 mit einer Lagerstelle 6 verbinden. Zwar ist das Verbindungselement 9 mit der Lagerstelle 6 über ein erstes Drehlager 11 und mit der Greifreifenlasche 7 über ein zweites Drehlager 12 verbunden und der Greifreifen 8 insoweit nur über Gelenke aufgehängt, jedoch sorgt eine Auslenkung der Verbindungselemente 9, wie in Figur 3 gezeigt, zu einer Vergrößerung des Radius eines Kreises durch die jeweiligen zweiten Drehlager 12. Soweit im System nur starre Elemente verwendet würden, wäre diese Bewegung trotz der Gelenke auch im Ganzen vollkommen starr. Dadurch jedoch, dass der Greifreifen 8 als elastisch verformbares Kraftelement ausgestaltet ist, etwa indem der Greifreifen 8 aus Federstahl hergestellt ist, kann sich der Greifreifen 8 verformen und erlaubt dadurch eine Auslenkung der Verbindungselemente 9, welche dann wiederum erfasst werden kann. Der Greifreifen 8 wirkt aufgrund seiner Verformung als Dämpfung, so dass eine leichte Verformung zunächst eine vergleichsweise starke Auslenkung erlaubt, während die Auslenkung mit größer werdender Kraft immer schwerer zu steigern sein wird. Der Benutzer wird dadurch nicht an einen festen Anschlag geraten, so dass die Bedienung des Rollstuhls sich angenehm und sehr gleichmäßig darstellt.

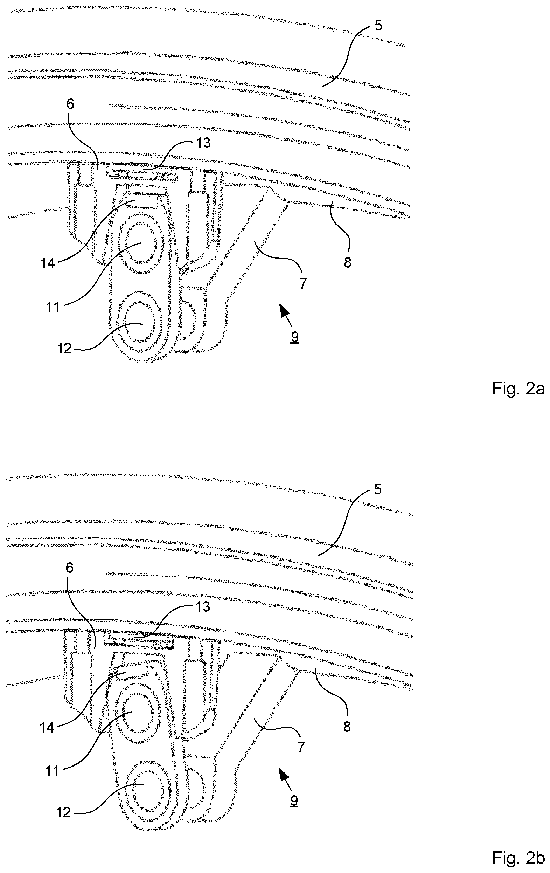

Wie in Figur 2a gezeigt, findet sich an einem Ende des Verbindungselements 9 ein Magnet 14, welcher im Messbereich einer dem Magneten 14 gegenüberliegenden Hall-Sonde 13 angeordnet ist. Die Figur 2a zeigt die Nullstellung des Greifreifens 8 ohne Auslenkung gegenüber der Radfelge 5, so dass der Magnet 14 mittig über der Hall-Sonde 13 liegt. Wird nun der Greifreifen 8 im Bild nach rechts verschoben, so lenkt sich das Verbindungsmittel 9 aus, indem zum Einen der Greifreifen 8 gestaucht, zum anderen das Verbindungsmittel 9 gleichzeitig um das erste Drehlager 11 gegenüber der Radfelge 5 und um das zweite Drehlager 12 gegenüber dem Greifreifen 8 gedreht wird. Hierdurch bewegt sich der Magnet 14 im Sensorbereich der Hall-Sonde 13, so dass sich deren Magnetfeld verändert und ein elektrisches Ausgangssignal erzeugt wird, welches dem Grad der elastischen Verformung des Greifreifens 8 entspricht.

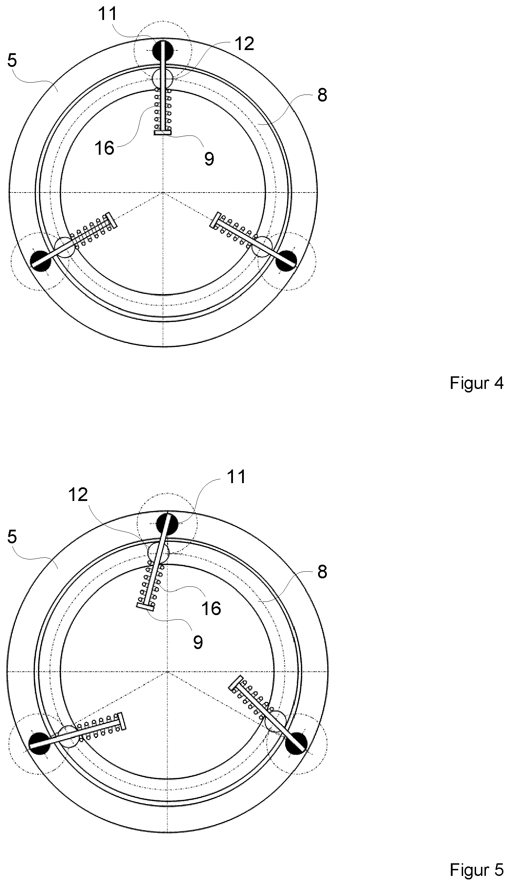

Aus den Figuren 4 und 5 ergibt sich eine Alternative, bei der nicht oder nicht nur der Greifreifen 8 oder die Radfelge 5 verformt wird, sondern die Verformung in erster Linie in den Verbindungselementen 9 stattfindet. Gezeigt ist beispielhaft eine Stauchung einer hierfür in den Verbindungselementen 9 vorgesehenen Druckfeder 16. Deren Stauchungsgrad kann, etwa über einen Wegsensor, festgestellt werden, wenn infolge einer Bewegung des Greifreifens 8 eine Auslenkung der Verbindungselemente 9 erfolgt. Wird insoweit der Greifreifen 8 in Figur 5 gegenüber seiner Lage in Figur 4 nach links ausgelenkt, so drehen sich die Verbindungselemente 9 in ihren ersten Drehlagern 11 und zweiten Drehlagern 12, wobei sich die Drehlager 11 und 12 voneinander entfernen. Aufgrund der festen absoluten Länge der Verbindungsmittel 9 wird die Druckfeder 16 gestaucht. Diese Stauchung verläuft jedoch sowohl elastisch und damit reversibel, als auch nichtlinear, so dass der Greifreifen 8 gegen zunehmend wachsenden Federdruck ausgelenkt werden muss und sich nach dem Loslassen wieder zurückstellt.

Im ganzen Rollstuhl 1 reichen zunächst zwei Signalgeber 10, nämlich für jedes Antriebsrad 4 einer, aus. Mehrere Signalgeber 10 pro Antriebsrad 4 sind möglich und erlauben dann, auch Druck- und Klopfsignale auf dem Greifreifen 8 in Steuersignale umzusetzen. Die Signalgeber 10 sind hierfür mit einem Steuergerät 15 des Rollstuhls 1 signalverbunden und leiten gemessene Signale, etwa in Form von elektrischen Ausgangssignalen verwendeter Hall-Sonden 13, an das Steuergerät 15 weiter. Ausgangsseitig sind an dem Steuergerät 15 elektrische Antriebsmittel 3, etwa in Form von Nabenmotoren, vorgesehen, welche entsprechend den Signalen der Signalgeber 10 angesteuert werden. Sowohl die Antriebsmittel 3 als auch das Steuergerät 15 und über dieses die Signalgeber 10, werden von einem Energiespeicher 2 mit elektrischer Spannung versorgt.

Vorstehend beschrieben ist somit ein muskelkraftbetriebener Rollstuhl, welcher eine präzise Erfassung der eingeleiteten Muskelkraft erlaubt, aber dennoch ausreichend robust ist, um den Rollstuhl im Alltag zu betreiben, sowie trotz eines geringen Betätigungswegs keinen festen Anschlag aufweist. Ebenfalls ist ein Verfahren zum Betrieb eines solchen Rollstuhls beschrieben, welches diese Probleme löst.

### BEZUGSZEICHENLISTE

- 1: Rollstuhl
- 2: Energiespeicher
- 3: Antriebsmittel
- 4: Antriebsrad
- 5: Radfelge
- 6: Lagerstelle
- 7: Greifreifenlasche
- 8: Greifreifen
- 9: Verbindungselement
- 10: Signalgeber
- 11: erstes Drehlager
- 12: zweites Drehlager
- 13: Hall-Sonde
- 14: Magnet
- 15: Steuergerät
- 16: Druckfeder

## Patentansprüche

1. Muskelkraftbetriebener Rollstuhl mit Hilfsantrieb, umfassend zwei Antriebsräder (4) mit Radfelgen (5) sowie elektrischen Antriebsmitteln (3), wobei den Radfelgen (5) jeweils ein Greifreifen (8) vermittels wenigstens zweier über den Umfang der Antriebsräder (4) verteilter Verbindungselemente (9) zugeordnet ist,
**dadurch gekennzeichnet, dass** die Radfelgen (5) oder die Greifreifen (8) ein elastisch verformbares Kraftelement bilden und diesem wenigstens ein Signalgeber (10) zugeordnet ist, welcher eine elastische Verformung des Kraftelements in radialer Richtung erfasst und ein mit dem Grad der Verformung des Kraftelements korrespondierendes Fahrsignal erzeugt, wobei der wenigstens eine Signalgeber (10) eingangsseitig mit einem Steuergerät (15) und dieses wiederum ausgangsseitig mit Steuereingängen der elektrischen Antriebsmittel (3) signalverbunden ist.

2. Rollstuhl gemäß Anspruch 1, **dadurch gekennzeichnet, dass** die Verbindungselemente (9) mit der Radfelge (5) jeweils vermittels eines ersten Drehlagers (11) und mit dem Greifreifen (8) vermittels eines zweiten Drehlagers (12) gelenkig verbunden sind, wobei vorzugsweise das erste Drehlager (11) und/oder das zweite Drehlager (12) als Wälzlager ausgeführt sind.

3. Rollstuhl gemäß einem der vorhergehenden Ansprüche, **dadurch gekennzeichnet, dass** die Verbindungselemente (9) mit dem Greifreifen (8) vermittels einer vom Greifreifen (8) radial nach innen oder außen weisenden Greifreifenlasche (7), mit der Radfelge (5) vermittels einer von der Radfelge (5) radial nach außen oder innen weisenden Lagerstelle (6) verbunden sind.

4. Rollstuhl gemäß einem der vorhergehenden Ansprüche, **dadurch gekennzeichnet, dass** es sich bei dem wenigstens einen Signalgeber (10) entweder um eine Hall-Sonde (13) handelt, welche an der Radfelge (5) oder am Greifreifen (8) angeordnet und einem Verbindungselement (9) zugewandt ist und welche eine Bewegung eines an diesem Verbindungselement (9) angeordneten Magneten (14) erfasst, oder um einen Biegebalken oder einen Doppelbiegebalken, auf dessen Außenseite ein Dehnmessstreifen angeordnet ist, oder um einen magnetostriktiven, einen magnetoresistiven, einen induktiven oder einen optischen Sensor.

5. Rollstuhl gemäß einem der vorhergehenden Ansprüchen mit mehreren Signalgebern (10), vorzugsweise mit einem Signalgeber (10) an jedem Verbindungselement (9).

6. Muskelkraftbetriebener Rollstuhl mit Hilfsantrieb, umfassend zwei Antriebsräder (4) mit Radfelgen (5) sowie elektrischen Antriebsmitteln (3), wobei den Radfelgen (5) jeweils ein Greifreifen (8) vermittels wenigstens zweier über den Umfang der Antriebsräder (4) verteilter Verbindungselemente (9) zugeordnet ist,
**dadurch gekennzeichnet, dass** die Verbindungselemente (9) elastisch verformbare Kraftelemente bilden und diesen wenigstens ein Signalgeber (10) zugeordnet ist, welcher eine elastische Verformung des Kraftelements in dessen Längsrichtung erfasst und ein mit dem Grad der Verformung des Kraftelements korrespondierendes Fahrsignal erzeugt, wobei der wenigstens eine Signalgeber (10) eingangsseitig mit einem Steuergerät (15) und dieses wiederum ausgangsseitig mit Steuereingängen der elektrischen Antriebsmittel (3) signalverbunden ist.

7. Rollstuhl gemäß Anspruch 6, **dadurch gekennzeichnet, dass** die Verbindungselemente (9) mit der Radfelge (5) jeweils vermittels eines ersten Drehlagers (11) und mit dem Greifreifen (8) vermittels eines zweiten Drehlagers (12) gelenkig verbunden sind, wobei das erste Drehlager (11) und/oder das zweite Drehlager (12) vorzugsweise als Wälzlager oder Gleitlager ausgeführt sind.

8. Rollstuhl gemäß einem der vorhergehenden Ansprüche, **dadurch gekennzeichnet, dass** der Greifreifen an einer Radfelge (5) weggelassen ist und die Steuerung nur mittels des Greifreifens (8) an der anderen Radfelge (5) ermöglicht ist.

9. Verfahren zur Steuerung eines Hilfsantriebs für einen muskelkraftbetriebenen Rollstuhl (1) mit zwei Antriebsrädern (4) mit Radfelgen (5), sowie an diesen vermittels gelenkig befestigter, über den Umfang der Radfelgen (5) verteilter Verbindungselemente (9) gelagerter Greifreifen (8), wobei zur Erzeugung eines Fahrsignals für mit den Antriebsrädern (4) verbundene elektrische Antriebsmittel (3) die Radfelgen (5) oder die Greifreifen (8) als Kraftelement durch Kraftbeaufschlagung mit Muskelkraft elastisch in radialer Richtung verformt werden, wobei wenigstens ein Signalgeber (10) ein mit der elastischen Verformung des Kraftelements korrespondierendes Fahrsignal erzeugt und an ein Steuergerät (15) zur Ansteuerung der elektrischen Antriebsmittel (3) übermittelt und die Antriebsmittel (3) aufgrund des Fahrsignals des Signalgebers (10) vermittels des Steuergeräts (15) angesteuert werden.

10. Verfahren gemäß Anspruch 9, **dadurch gekennzeichnet, dass** es sich bei dem wenigstens einen Kraftelement um den wenigstens einen Greifreifen (8) oder wenigstens eine der Radfelgen (5) handelt.

11. Verfahren gemäß Anspruch 10, **dadurch gekennzeichnet, dass** eine gleichsinnige Auslenkung mehrerer über den Umfang der Radfelgen (5) verteilter Verbindungselemente (9) von dem Steuergerät (15) in ein Fahrsignal in Drehrichtung der Auslenkung umgesetzt wird, wobei das Fahrsignal vorzugsweise stärker, entsprechend einer schnelleren Fahrt, ausgeprägt wird, je größer die Auslenkung des jeweiligen Verbindungselements (9) ist.

12. Verfahren gemäß Anspruch 11, **dadurch gekennzeichnet, dass** eine ungleichsinnige Auslenkung mehrerer über den Umfang jeweils einer der Radfelgen (5) verteilter Verbindungselemente (9) von dem Steuergerät (15) in ein anderweitiges Steuersignal umgesetzt wird.

13. Verfahren zur Steuerung eines Hilfsantriebs für einen muskelkraftbetriebenen Rollstuhl (1) mit zwei Antriebsrädern (4) mit Radfelgen (5), sowie an diesen vermittels gelenkig befestigter, über den Umfang der Radfelgen (5) verteilter Verbindungselemente (9) gelagerter Greifreifen (8), wobei zur Erzeugung eines Fahrsignals für mit den Antriebsrädern (4) verbundene elektrische Antriebsmittel (3) die Verbindungselemente (9) als Kraftelemente durch Kraftbeaufschlagung mit Muskelkraft elastisch in ihrer Längsrichtung verformt werden, wobei wenigstens ein Signalgeber (10) ein mit der elastischen Verformung der Kraftelemente korrespondierendes Fahrsignal erzeugt und an ein Steuergerät (15) zur Ansteuerung der elektrischen Antriebsmittel (3) übermittelt und die Antriebsmittel (3) aufgrund des Fahrsignals des Signalgebers (10) vermittels des Steuergeräts (15) angesteuert werden.

14. Verfahren gemäß einem der Ansprüche 9 bis 13, **dadurch gekennzeichnet, dass** mehrere Fahr- und/oder anderweitige Steuersignale zu einer Signalfolge zusammengesetzt werden.

15. Verfahren gemäß einem der Ansprüche 9 bis 14, **dadurch gekennzeichnet, dass** das Steuergerät (15) selbstlernend ist, insbesondere übliche Signale und ggf. Signalfolgen erkennt und lernt und bei Abweichungen fehlerhafte Eingaben ausgleicht und sich hierdurch an die Konstitution eines Benutzers anpasst.

## Claims

1. Muscle-powered wheelchair having an auxiliary drive, the wheelchair comprising two drive wheels (4) having wheel rims (5) and electrical drive means (3), a push rim (8) being associated with each of the wheel rims (5) by means of at least two connecting elements (9) distributed over the circumference of the drive wheels (4),
**characterized in that** the wheel rims (5) or the push rims (8) form an elastically deformable force element and at least one signal generator (10) is associated with said element, which signal generator detects an elastic deformation of the force element in the radial direction and generates a travel signal corresponding to the degree of deformation of the force element, the at least one signal generator (10) being signal-connected on the input side to a control device (15) and this device in turn being signal-connected on the output side to control inputs of the electrical drive means (3).

2. Wheelchair according to claim 1, **characterized in that** the connecting elements (9) are hingedly connected to each wheel rim (5) by means of a first pivot bearing (11) and to the push rim (8) by means of a second pivot bearing (12), the first pivot bearing (11) and/or the second pivot bearing (12) preferably being designed as roller bearings.

3. Wheelchair according to either of the preceding claims,
**characterized in that** the connecting elements (9) are connected to the push rim (8) by means of a push rim bracket (7) pointing radially inwards or outwards from the push rim (8), and connected to the wheel rim (5) by means of a bearing point (6) pointing radially outwards or inwards from the wheel rim (5).

4. Wheelchair according to any of the preceding claims,
**characterized in that** the at least one signal generator (10) is either a Hall probe (13) which is arranged on the wheel rim (5) or on the push rim (8) and faces a connecting element (9) and which detects a movement of a magnet (14) arranged on this connecting element (9), or is a bending beam or a double bending beam on the outside of which a strain gauge is arranged, or is a magnetostrictive sensor, a magnetoresistive sensor, an inductive sensor or an optical sensor.

5. Wheelchair according to any of the preceding claims, comprising a plurality of signal generators (10), preferably comprising one signal generator (10) on each connecting element (9).

6. Muscle-powered wheelchair having an auxiliary drive, the wheelchair comprising two drive wheels (4) having wheel rims (5) and electrical drive means (3), a push rim (8) being associated with each of the wheel rims (5) by means of at least two connecting elements (9) distributed over the circumference of the drive wheels (4),
**characterized in that** the connecting elements (9) form elastically deformable force elements and at least one signal generator (10) is associated with said elements, which signal generator detects an elastic deformation of the force element in the longitudinal direction thereof and generates a travel signal corresponding to the degree of deformation of the force element, the at least one signal generator (10) being signal-connected on the input side to a control device (15) and this device in turn being signal-connected on the output side to control inputs of the electrical drive means (3).

7. Wheelchair according to claim 6, **characterized in that** the connecting elements (9) are hingedly connected to each wheel rim (5) by means of a first pivot bearing (11) and to the push rim (8) by means of a second pivot bearing (12), the first pivot bearing (11) and/or the second pivot bearing (12) preferably being designed as roller bearings or sliding bearings.

8. Wheelchair according to any of the preceding claims,
**characterized in that** the push rim is omitted on one wheel rim (5) and control is only possible by means of the push rim (8) on the other wheel rim (5).

9. Method for controlling an auxiliary drive for a muscle-powered wheelchair (1) comprising two drive wheels (4) having wheel rims (5), and push rims (8) mounted thereon by means of hingedly fastened connecting elements (9) distributed over the circumference of the wheel rims (5), wherein, in order to generate a travel signal for electrical drive means (3) connected to the drive wheels (4), the wheel rims (5) or the push rims (8) are, as a force element, elastically deformed in the radial direction by the application of force using muscle power, wherein at least one signal generator (10) generates a travel signal corresponding to the elastic deformation of the force element and transmits it to a control device (15) for controlling the electrical drive means (3), and the drive means (3) are controlled by means of the control device (15) on the basis of the travel signal from the signal generator (10).

10. Method according to claim 9, **characterized in that** the at least one force element is the at least one push rim (8) or at least one of the wheel rims (5).

11. Method according to claim 10, **characterized in that** a deflection, in the same direction, of a plurality of connecting elements (9) distributed over the circumference of the wheel rims (5) is converted by the control device (15) into a travel signal in the direction of rotation of the deflection, the travel signal preferably being stronger, corresponding to faster travel, the greater the deflection of the relevant connecting element (9).

12. Method according to claim 11, **characterized in that** a deflection, not in the same direction, of a plurality of connecting elements (9) distributed over the circumference of each of the wheel rims (5) is converted by the control device (15) into another control signal.

13. Method for controlling an auxiliary drive for a muscle-powered wheelchair (1) comprising two drive wheels (4) having wheel rims (5), and push rims (8) mounted thereon by means of hingedly fastened connecting elements (9) distributed over the circumference of the wheel rims (5), wherein, in order to generate a travel signal for electrical drive means (3) connected to the drive wheels (4), the connecting elements (9) are, as force elements, elastically deformed in the longitudinal direction thereof by the application of force using muscle power, wherein at least one signal generator (10) generates a travel signal corresponding to the elastic deformation of the force elements and transmits it to a control device (15) for controlling the electrical drive means (3), and the drive means (3) are controlled by means of the control device (15) on the basis of the travel signal from the signal generator (10).

14. Method according to any of claims 9 to 13, **characterized in that** a plurality of travel and/or other control signals are combined to form a signal sequence.

15. Method according to any of claims 9 to 14, **characterized in that** the control device (15) is self-learning, in particular recognizes and learns common signals and optionally signal sequences and, in the event of deviations, compensates for erroneous inputs and thereby adapts to the physical condition of a user.

## Revendications

1. Fauteuil roulant fonctionnant par la force musculaire comportant un entraînement auxiliaire, comprenant deux roues d'entraînement (4) comportant des jantes de roues (5) ainsi que des moyens d'entraînement électriques (3), dans lequel respectivement une main courante (8) est associée aux jantes de roues (5) au moyen d'au moins deux éléments de liaison (9) répartis sur la périphérie des roues d'entraînement (4),
**caractérisé en ce que** les jantes de roues (5) ou les mains courantes (8) forment un élément de force déformable élastiquement et à celui-ci est associé au moins un générateur de signaux (10) qui détecte une déformation élastique de l'élément de force dans la direction radiale et génère un signal de déplacement correspondant au degré de déformation de l'élément de force, dans lequel l'au moins un générateur de signaux (10) est connecté par signaux côté entrée à un appareil de commande (15) et celui-ci est à son tour connecté côté sortie à des entrées de commande des moyens d'entraînement électriques (3).

2. Fauteuil roulant selon la revendication 1, **caractérisé en ce que** les éléments de liaison (9) sont reliés de manière articulée respectivement à la jante de roue (5) au moyen d'un premier palier pivotant (11) et à la main courante (8) au moyen d'un second palier pivotant (12), dans lequel le premier palier pivotant (11) et/ou le second palier pivotant (12) sont de préférence réalisés sous forme de paliers à roulements.

3. Fauteuil roulant selon l'une des revendications précédentes,
**caractérisé en ce que** les éléments de liaison (9) sont reliés à la main courante (8) au moyen d'une patte de main courante (7) orientée radialement vers l'intérieur ou l'extérieur depuis la main courante (8), à la jante de roue (5) au moyen d'un point d'appui (6) orienté radialement vers l'extérieur ou l'intérieur depuis la jante de roue (5).

4. Fauteuil roulant selon l'une des revendications précédentes,
**caractérisé en ce que** l'au moins un générateur de signaux (10) est soit une sonde à effet Hall (13) qui est disposée sur la jante de roue (5) ou sur la main courante (8) et qui est tournée vers un élément de liaison (9) et qui détecte un mouvement d'un aimant (14) disposé sur ledit élément de liaison (9), soit une barre de flexion ou une double barre de flexion, sur la face extérieure de laquelle est disposée une jauge d'allongement, ou est un capteur magnétostrictif, un capteur magnétorésistif, un capteur inductif ou un capteur optique.

5. Fauteuil roulant selon l'une des revendications précédentes comportant plusieurs générateurs de signaux (10), de préférence comportant un générateur de signaux (10) sur chaque élément de liaison (9).

6. Fauteuil roulant fonctionnant par la force musculaire comportant un entraînement auxiliaire, comprenant deux roues d'entraînement (4) comportant des jantes de roues (5) ainsi que des moyens d'entraînement électriques (3), dans lequel respectivement une main courante (8) est associée aux jantes de roues (5) au moyen d'au moins deux éléments de liaison (9) répartis sur la périphérie des roues d'entraînement (4),
**caractérisé en ce que** les éléments de liaison (9) forment des éléments de force élastiquement déformables et à ceux-ci est associé au moins un générateur de signaux (10) qui détecte une déformation élastique de l'élément de force dans sa direction longitudinale et génère un signal de déplacement correspondant au degré de déformation de l'élément de force, dans lequel l'au moins un générateur de signaux (10) est connecté par signaux côté entrée à un appareil de commande (15) et celui-ci est à son tour connecté côté sortie à des entrées de commande des moyens d'entraînement électriques (3).

7. Fauteuil roulant selon la revendication 6, **caractérisé en ce que** les éléments de liaison (9) sont reliés de manière articulée respectivement à la jante de roue (5) au moyen d'un premier palier pivotant (11) et à la main courante (8) au moyen d'un second palier pivotant (12), dans lequel le premier palier pivotant (11) et/ou le second palier pivotant (12) sont de préférence réalisés sous forme de paliers à roulements ou de paliers lisses.

8. Fauteuil roulant selon l'une des revendications précédentes,
**caractérisé en ce que** la main courante est omise sur une jante de roue (5) et la commande est possible uniquement au moyen de la main courante (8) sur l'autre jante de roue (5).

9. Procédé pour la commande d'un entraînement auxiliaire pour un fauteuil roulant (1) fonctionnant par la force musculaire, comportant deux roues d'entraînement (4) comportant des jantes de roues (5), ainsi que des mains courantes (8) montées sur celles-ci au moyen d'éléments de liaison (9) fixés de manière articulée et répartis sur la périphérie des jantes de roues (5), dans lequel, pour la génération d'un signal de déplacement pour les moyens d'entraînement électriques (3) reliés aux roues d'entraînement (4), les jantes de roues (5) ou les mains courantes (8) sont déformées élastiquement comme élément de force dans la direction radiale par application de force avec une force musculaire, dans lequel au moins un générateur de signaux (10) génère un signal de déplacement correspondant à la déformation élastique de l'élément de force et le transmet à un appareil de commande (15) pour la commande des moyens d'entraînement électriques (3) et les moyens d'entraînement (3) sont commandés sur la base du signal de déplacement du générateur de signaux (10) au moyen de l'appareil de commande (15).

10. Procédé selon la revendication 9, **caractérisé en ce que** l'au moins un élément de force est l'au moins une main courante (8) ou au moins l'une des jantes de roues (5).

11. Procédé selon la revendication 10, **caractérisé en ce qu'**une déviation dans le même sens de plusieurs éléments de liaison (9) répartis sur la périphérie des jantes de roues (5) est convertie par l'appareil de commande (15) en un signal de déplacement dans le sens de rotation de la déviation, dans lequel le signal de déplacement est de préférence plus prononcé, ce qui correspond à un déplacement plus rapide, à mesure que la déviation de l'élément de liaison (9) respectif est élevée.

12. Procédé selon la revendication 11, **caractérisé en ce qu'**une déviation dans des sens différents de plusieurs éléments de liaison (9) répartis sur la périphérie de respectivement l'une des jantes de roues (5) est convertie par l'appareil de commande (15) en un signal de commande d'une autre nature.

13. Procédé pour la commande d'un entraînement auxiliaire pour un fauteuil roulant (1) fonctionnant par la force musculaire, comportant deux roues d'entraînement (4) comportant des jantes de roues (5), ainsi que des mains courantes (8) montés sur celles-ci au moyen d'éléments de liaison (9) fixés de manière articulée et répartis sur la périphérie des jantes de roues (5), dans lequel, pour la génération d'un signal de déplacement pour des moyens d'entraînement électriques (3) reliés aux roues d'entraînement (4), les éléments de liaison (9) sont déformés élastiquement dans leur direction longitudinale en tant qu'éléments de force par l'application de force avec une force musculaire, dans lequel au moins un générateur de signaux (10) génère un signal de déplacement correspondant à la déformation élastique des éléments de force et le transmet à un appareil de commande (15) pour la commande des moyens d'entraînement électriques (3) et les moyens d'entraînement (3) sont commandés sur la base du signal de déplacement du générateur de signaux (10) au moyen de l'appareil de commande (15).

14. Procédé selon l'une des revendications 9 à 13, **caractérisé en ce que** plusieurs signaux de déplacement et/ou signaux de commande d'une autre nature sont assemblés en une séquence de signaux.

15. Procédé selon l'une des revendications 9 à 14, **caractérisé en ce que** l'appareil de commande (15) est à autoapprentissasge, reconnaît et apprend en particulier des signaux usuels et éventuellement des séquences de signaux et, en cas d'écarts, compense des entrées erronées et s'adapte ainsi à la constitution d'un utilisateur.
